# EUROPEAN PATENT SPECIFICATION

(11) **EP 3 739 447 B1**
(45) Date of publication and mention of the grant of the patent: **02.07.2025**
(21) Application number: 19831565.7
(22) Date of filing: 31.05.2019
(51) Int. Cl.: G06F 9/445

(54) **METHOD FOR RUNNING PROGRAM, APPARATUS, COMPUTER DEVICE AND STORAGE MEDIUM**
VERFAHREN ZUM AUSFÜHREN EINES PROGRAMMS, GERÄT, COMPUTERVORRICHTUNG UND SPEICHERMEDIUM
PROCÉDÉ D'EXÉCUTION DE PROGRAMME, APPAREIL, DISPOSITIF INFORMATIQUE ET SUPPORT DE STOCKAGE

(30) Priority: 05.07.2018 CN 201810731500
(43) Date of publication of application: 18.11.2020
(73) Proprietor: Tencent Technology (Shenzhen) Company Limited, Shenzhen, Guangdong, 518057 (CN)
(72) Inventor: LIANG, Zhaopeng, Shenzhen, Guangdong 518057 (CN); LIANG, Shangtao, Shenzhen, Guangdong 518057 (CN); LI, Shun, Shenzhen, Guangdong 518057 (CN); LIN, Xing, Shenzhen, Guangdong 518057 (CN); LIN, Chao, Shenzhen, Guangdong 518057 (CN); HUANG, Canhui, Shenzhen, Guangdong 518057 (CN); GUI, Xuyu, Shenzhen, Guangdong 518057 (CN); HU, Haojun, Shenzhen, Guangdong 518057 (CN); YANG, Yihong, Shenzhen, Guangdong 518057 (CN); LUO, Weibang, Shenzhen, Guangdong 518057 (CN); LI, Yaxuan, Shenzhen, Guangdong 518057 (CN); CHENG, Zhe, Shenzhen, Guangdong 518057 (CN); LIN, Qingjie, Shenzhen, Guangdong 518057 (CN); WU, Yu, Shenzhen, Guangdong 518057 (CN); XIAO, Taotao, Shenzhen, Guangdong 518057 (CN)
(74) Representative: Novagraaf International SA
(86) International application number: PCT/CN2019/089555
(87) International publication number: WO 2020/007146

(56) References cited:
- CN-A- 102 135 892
- CN-A- 102 480 558
- CN-A- 104 699 501
- CN-A- 108 108 205
- CN-A- 109 165 050
- US-A1- 2014 136 664
- US-A1- 2018 081 693
- US-B2- 9 517 410

## Description

### RELATED APPLICATION

This application claims priority to Chinese Patent Application No. 201810731500.0, entitled "PROGRAM OPERATING METHOD AND APPARATUS, COMPUTING DEVICE, AND STORAGE MEDIUM" filed with the China National Intellectual Property Administration on July 05, 2018.

### FIELD OF THE TECHNOLOGY

This application relates to the field of information technologies, and in particular, to a program operating method, a computing device, and a storage medium.

### BACKGROUND OF THE DISCLOSURE

With the development of information technologies, online activities can meet an increasing number of life needs of users, such as shopping, movie watching, financial management, and the like. A user can carry out online activities by installing various application programs on a terminal device.

US 2014/136664 A1 discloses technology for decomposing an application into fragments and streaming the application in fragments. A computer-implemented method includes steps of determining multiple application fragments of a computer application, wherein each application fragment includes a code to present at least one interface of the computer application; storing the application fragments at a storage device; generating a resource dependency data structure, wherein for each specific application fragment of the application fragments, the resource dependency data structure includes identifications of resources that are needed for running the specific application fragment; and streaming, via a network component, at least one application fragment of the application fragments to a computing device.

US 2018/081693 A1 discloses techniques for improved mobile application architectures and service communication protocols. A mobile device configured for providing a mobile application includes multiple service applications. The service applications may execute asynchronously and in separate containers, providing service orientated architecture (SOA)-like services with respect to other portions of the mobile application, or even external applications. A monolithic mobile application is separated into separate service applications. A subset of all service applications may be started up, and executed on demand.

US 9517410 B2 discloses methods and systems for remotely provisioning immediately executable games with license control in secure environments. Immediately initially executable portions of games are pushed onto user desktops, and when games are selected for play, additional components of selected games are streamed to said desktops.

### SUMMARY

The invention is defined by the appended claims.

### BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from the accompanying drawings without creative efforts.
FIG. 1 is a schematic structural diagram of a system to which a program operating method is applicable according to an embodiment of this application.
FIG. 2A is a flowchart of a program operating method according to an embodiment of this application.
FIG. 2B is a flowchart of a program operating method according to an embodiment of this application.
FIG. 2C is a flowchart of a program operating method according to an embodiment of this application.
FIG. 3 is an embodiment of displaying a page when a subpackage is run according to an embodiment of this application.
FIG. 4 is a flowchart of a program operating method according to an embodiment of this application.
FIG. 5A is a schematic structural diagram of a program operating apparatus according to an embodiment of this application.
FIG. 5B is a schematic structural diagram of a program operating apparatus according to an embodiment of this application.
FIG. 5C is a schematic structural diagram of a program operating apparatus according to an embodiment of this application.
FIG. 6 is a schematic structural diagram of a program operating apparatus according to an embodiment of this application.
FIG. 7 is a schematic structural diagram of hardware of a computing device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

To provide brief and intuitive descriptions, the following describes the solutions of this application by describing several typical embodiments. A large number of details in the embodiments are only used to help understand the solutions of this application. However, obviously, implementation of the technical solutions of this application is not limited to the details. To avoid making the solutions of this application obscure, some implementations are not described in detail, but only a framework is provided. In the following description, "including" means "including but not limited to", and "according to ... "means "according to at least ..., but not limited to according only to ... ". A number of elements is not particularly specified in the following descriptions, it means that there may be one or more elements, or it may be understood that there is at least one element.

When a user obtains an application program to be installed on a terminal device, a severe time consumption problem may occur when the application program is downloaded and run due to an excessive size of the application program, and therefore, reducing such time consumption is the key to resolving the foregoing problem.

In view of this, the embodiments of this application provide a program operating method and apparatus, a computing device, and a storage medium. For applying the technical solutions of this application, a starting resource of a program, that is, first operating data, may be pulled first, to reduce the time consumption due to download of excessive amount of data, and starting time can be accelerated when the program is started, to bring a user good use experience. When the user performs a program operation, a page identifier to be displayed, that is, a second page identifier, is determined according to an instruction of the user. When the second page identifier is not in the starting resource, other operating resources of the program, such as second operating data, are pulled according to the second page identifier, where the second operating data includes operating data corresponding to the second page identifier, thereby greatly optimizing the operating speed of the program.

The technical solutions are implemented based on a parent application system and a child application system. Specifically, the child application is an application program that runs with dependence on the parent application, and the child application may be downloaded, started, run, and closed by using the parent application. The parent application may be a social networking application, a specific application dedicated to supporting the child application, a file management application, a mail application, a game application, or the like. The social networking application includes an instant messaging application (for example, WeChat), a social network service (SNS) application, a live broadcast application, or the like. The child application is an application that can be implemented in an environment provided by the parent application, and the child application may be specifically a social networking application, a file management application, a mail application, a game application, or the like.

Description is made by using an example in which the parent application is WeChat and the child application is a WeChat applet. The WeChat applet is a new open function, and a developer can quickly develop an applet. The applet may be easily acquired and propagated in WeChat, while having excellent use experience. The applet builds a system for operating third-party programs in the WeChat application. By using a method, such as scanning a QR code through WeChat, searching for the name of the applet, clicking on a shared message or the like, the WeChat applet (that is, a third-party program) is downloaded and run to provide a service to the user. Each WeChat applet has a corresponding code package, and the code package needs to be first downloaded locally before the applet is run. Therefore, there is certainly a download process for the first time of starting the applet on the user side. It is time-consuming to download a large code package, and the time consumption of the download affects the starting time consumption. The larger the code package is, the greater the impact on the starting time consumption is.

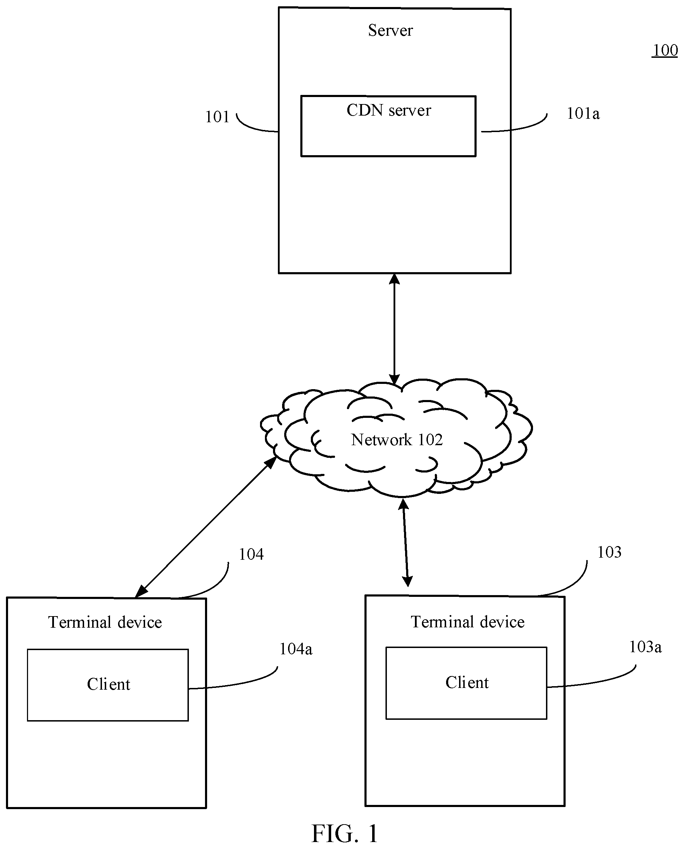

FIG. 1 is a schematic structural diagram of a system 100 to which a program operating method is applicable according to an embodiment of this application. The system 100 includes a server 101, a network 102, and a plurality of terminal devices, such as a terminal device 103 and a terminal device 104.

Application server software for splitting a program is installed in the server 101, and the program is split into a plurality of subpackages and a starting package. The server 101 may further include a plurality of content delivery network (CDN) servers 101a to which the subpackages and the starting package are transmitted. When any CDN server receives an obtaining request transmitted by a client, a corresponding starting package or subpackage is transmitted to the client.

The terminal device 103 or 104 refers to a device having a data computing processing function and includes, but is not limited to, a smart phone (in which a communications module is installed), a palmtop computer, a tablet computer, or the like. Operating systems are installed on the terminal devices, including but not limited to the Android operating system, the Symbian operating system, the Windows mobile operating system, the Apple iPhone OS operating system, or the like.

A client 103a or 104a (for example, a social APP) is installed in the terminal device 103 or 104. The client performs information exchange with the server 101 through the network 102. The client may transmit an obtaining request to the server 101 to obtain a subpackage or starting package.

The network 102 may be a wired network, or a wireless network.

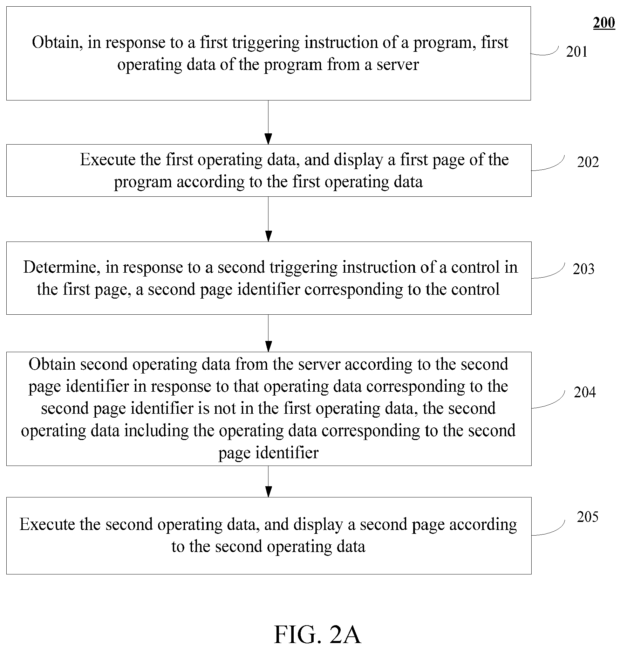

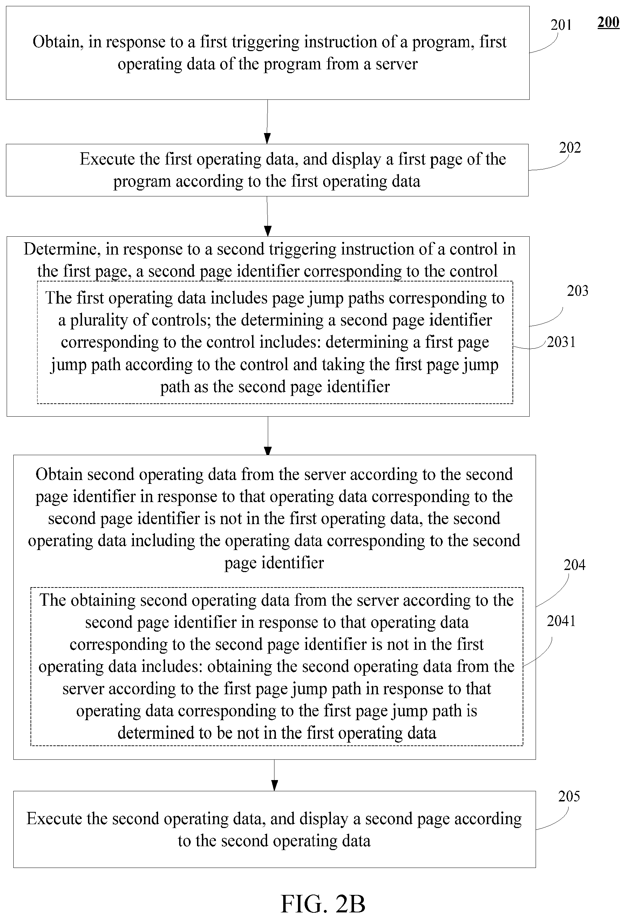

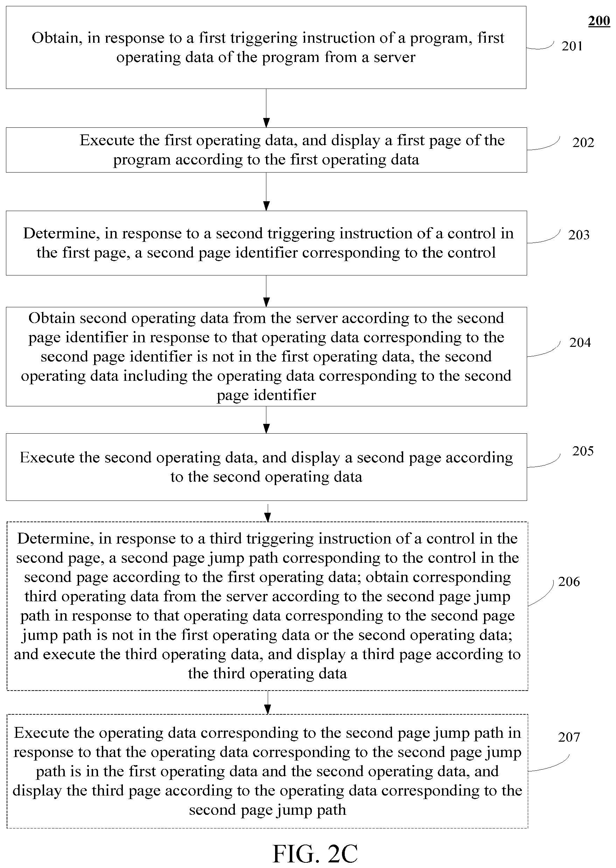

Based on the system 100, according to this embodiment of this application, a program operating method is provided, and is applied to a client of the terminal device 103 or 104. As shown in FIG. 2, the method 200 includes the following steps:
Step 201: Obtain, in response to a first triggering instruction of a program, first operating data of the program from a server.

The first triggering instruction may be a program starting instruction.

The first operating data includes at least code used for starting the program, and the code is a program starting package, the program starting package including program starting code used for starting the program. The starting package may execute the code only on a program homepage, or may have other functions to execute the code.

The obtaining the first operating data of the program from the server includes:
transmitting the obtaining request to the server, the obtaining request carrying an identifier of the program; and receiving the first operating data transmitted by the server in response to the obtaining request.

For example, according to the foregoing description, the user may search for the applet named "XX video" through the WeChat APP. After the applet is found, the user gives an instruction to start the applet, that is, click the found applet. In response to the triggering instruction, the WeChat APP transmits an applet obtaining request to the server, and the obtaining request may carry an identifier of the applet. After receiving the obtaining request, the server transmits the starting package of the applet to the WeChat APP in response to the obtaining request.

Step 202: Execute the first operating data, and display a first page of the program according to the first operating data.

The first page is a starting page or a homepage of the program.

In some embodiments, the executing the first operating data includes: executing the first operating data by using an operating container. After the first operating data is executed, the starting page of the applet may be displayed.

Step 203: Determine, in response to a second triggering instruction of a control in the first page, a second page identifier corresponding to the control.

The second triggering instruction may include, but not limited to a page jump instruction, such as a video watching instruction, a music listening instruction, a game loading instruction, or the like.

The second page is a jump page other than the starting page, such as a video watching page, a music listening page, or the like.

The control may be, but not limited to an icon, a button, or the like.

According to the invention, as shown in FIG. 2B, the first operating data includes page jump paths corresponding to a plurality of controls. Step 2031: The determining a second page identifier corresponding to the control includes: determining a first page jump path according to the control and taking the first page jump path as the second page identifier.

The plurality of controls may include a plurality of controls included in the first operating data, and may further include controls included in other operating data, such as controls in second operating data.

For example, according to the foregoing description, when the user clicks a video introduction icon in a starting page of a video applet, that is, the user gives a second triggering instruction to watch the video, the WeChat APP determines a page jump path in response to the second triggering instruction.

Step 204: Obtain second operating data from the server according to the second page identifier in response to that operating data corresponding to the second page identifier is not in the first operating data, the second operating data including the operating data corresponding to the second page identifier.

The second operating data includes portions of code of the program, the portions of code may include a program subpackage, and the subpackage includes program function code used for supporting function operating of the program. The function code in the subpackage may be a type of function code, such as movie-related function code, music-related function code, or news-related function code.

Code of the applet may be divided according to functions. Views and the logic of pages under the same function are placed under the same directory, and some cross-functional common logic is placed under the starting package.

According to the invention, as shown in FIG. 2B, Step 2041: The obtaining second operating data from the server according to the second page identifier in response to that operating data corresponding to the second page identifier is not in the first operating data includes: obtaining the second operating data from the server according to the first page jump path in response to that operating data corresponding to the first page jump path is determined to be not in the first operating data.

Step 205: Execute the second operating data, and display a second page according to the second operating data.

In some embodiments, the executing the second operating data includes: executing the second operating data by using the operating container, and displaying a second page of the applet after the second operating data is executed.

In the technical solution provided in this embodiment of this application, loading may be performed according to requirements of a user by dividing the applet code package into a starting package and a plurality of subpackages, so that starting experience of the user is not affected in response to that a larger applet code package size can be supported.

In some embodiments, the obtaining the first operating data of the program from the server includes: transmitting the obtaining request to the server, the obtaining request carrying an identifier of the program; and receiving the first operating data transmitted by the server in response to the obtaining request.

For example, according to the foregoing description, the user may search for the applet named "XX video" through the WeChat APP. After the applet is found, the user gives an instruction to start the applet, that is, click the found applet. In response to the triggering instruction, the WeChat APP transmits an applet obtaining request to the server, and the obtaining request may carry an identifier of the applet. After receiving the obtaining request, the server transmits the starting package code of the applet to the WeChat APP in response to the obtaining request. The starting package may only include the operating code of the starting page of the video applet, such as, initial page view layer code and initial page logical code.

In some embodiments, the executing the first operating data includes: executing the first operating data by using an operating container. The method 200 further includes: storing the obtained first operating data in a local storage area; obtaining the first operating data in the local storage area, and transmitting the first operating data to the operating container; and performing the step of executing the first operating data by using the operating container after the first operating data is transmitted to the operating container.

The first operating data includes first logical operating data and first view operating data corresponding to the first page.

The obtaining the first operating data in the local storage area, and transmitting the first operating data to the operating container includes: obtaining the first logical operating data in the local storage area, and transmitting the first logical operating data to the operating container; and obtaining the first view operating data in the local storage area, and transmitting the first view operating data to the operating container after the operating container executes the first logical operating data, and then displaying the first page of the program.

The operating container may be a JavaScriptCore operating container.

The first logical operating data corresponding to the first page is first logical code, that is, logical code of the starting page of the applet.

The first view operating data corresponding to the first page is first view layer code, that is, view layer code of the starting page of the applet.

For example, according to the foregoing description, after the WeChat APP receives the first operating data transmitted by the server, the first operating data may be stored in the local storage area of the terminal device. The WeChat APP obtains the first operating data from the local storage area, injects the first logical code into the JavaScriptCore operating container, and injects the first view layer code after the JavaScriptCore operating container executes the first logical code, to display an initial page of the video applet to the user.

The JavaScriptCore operating container may be provided with a logical layer unit and a view layer unit. The logical layer unit may be used for executing page logical code, and the view layer unit may be used for executing page style code, that is, page view layer code. The logical layer unit executes the page logical code to obtain page data, and transmits the page data to a corresponding view layer unit. The view layer unit renders the page according to the page data. After the rendering is completed, the corresponding view layer unit transmits a notification of rendering completion to the logical layer unit. After the rendering is completed, the operating system of the terminal device displays the rendered page in an application program window.

In some embodiments, the method 200 further includes: executing the second operating data in response to that the operating data corresponding to the second page identifier is not in the first operating data, and displaying the second page according to the second operating data.

The first operating data includes page jump paths corresponding to a plurality of controls. The determining a second page identifier corresponding to the control includes: determining a first page jump path according to the control and taking the first page jump path as the second page identifier; and the obtaining second operating data from the server in response to that operating data corresponding to the second page identifier is not in the first operating data including: obtaining the second operating data from the server according to the first page jump path in response to that operating data corresponding to the first page jump path is determined to be not in the first operating data.

The second operating data includes second logical operating data and second view operating data corresponding to a plurality of page jump paths. The method 200 further includes: storing the obtained second operating data in a local storage area.

In an embodiment of this application, the second logical operating data is second logical code, and the second view operating data is second view layer code.

The executing the second operating data includes: executing the second operating data by using the operating container.

The executing the second operating data, and displaying the second page according to the second operating data includes: obtaining the second logical operating data that corresponds to a first page jump path and that is in the local storage area, and transmitting the second logical operating data to an operating container; and obtaining the second view operating data that corresponds to the first page jump path and that is in the local storage area, and transmitting the second view operating data to the operating container after the operating container executes the second logical operating data corresponding to the first page jump path, and then displaying the second page.

For example, according to the foregoing description, when the user clicks a "bb" movie video introduction icon in the starting page of the video applet, that is, the user gives a second triggering instruction to watch the "bb" movie video, the WeChat APP, in response to the second triggering instruction of the control, determines a page jump path such as "aaa" according to the correspondence between the control stored in the first operating data and the page jump path, and uses the page jump path as a page identifier of playing the "bb" movie video. The WeChat APP first determines whether there is operating data corresponding to "aaa" through search in the first operating data, and then transmits an obtaining request to the server when there is no operating data, the obtaining request carrying the page jump path "aaa". The server searches for subpackage code corresponding to the page jump path "aaa" according to the page jump path "aaa", that is, the second operating data. The subpackage code includes the operating data corresponding to the page jump path "aaa". The server transmits the second operating data to the WeChat APP. The second operating data may be stored in the local storage area of the terminal device. The WeChat APP obtains the second operating data from the local storage area, and injects the second logical code corresponding to the page jump path "aaa" into the JavaScriptCore operating container, and injects the second view layer code corresponding to the page jump path "aaa" after the JavaScriptCore operating container executes the second logical code, to display a second page of the video applet, that is, a page that plays the "bb" movie video to the user.

The starting package can store the page jump paths corresponding to all controls of the applet. The starting package can further only store page jump paths corresponding to controls in the starting package. The subpackage stores page jump paths corresponding to controls in the subpackage. When the subpackage stores the page jump paths corresponding to the controls in the subpackage, the page jump paths may be determined through the subpackage, and whether there is operating data corresponding to the page jump paths may be determined through search in a currently obtained code package.

In some embodiments, the method 200 further includes: executing the operating data corresponding to the second page identifier in response to that the operating data corresponding to the second page identifier is in the first operating data, and displaying the second page according to the operating data corresponding to the second page identifier.

In some embodiments, the first operating data further includes second logical operating data and second view operating data corresponding to a plurality of page jump paths. The method 200 further includes: obtaining the second logical operating data that corresponds to the first page jump path and that is in the local storage area, and transmitting the second logical operating data to the operating container in response to that the operating data corresponding to the first page jump path is determined to be in the first operating data; and obtaining the second view operating data that corresponds to the first page jump path and that is in the local storage area, and transmitting the second view operating data to the operating container after the operating container executes the second logical operating data corresponding to the first page jump path, and then displaying the second page of the program.

For example, according to the foregoing description, when the operating data is in the first operating data, logical code and view layer code that are in the local storage area and that correspond to the page jump path "aaa" are obtained. The logical code corresponding to the page jump path "aaa" is injected into the JavaScriptCore operating container. The view layer code corresponding to the page jump path "aaa" is injected into the JavaScriptCore operating container after the JavaScriptCore operating container executes the logical code, to display the second page of the video applet, that is, the page that plays the "bb" movie video to the user.

When the operating data is in the first operating data, because only starting logical code and starting view layer code may be executed when the applet is initialized, that is, started, other logical code and corresponding view layer code in the first operating data need to be injected into the operating container when the other logical code and the corresponding view layer code are selected.

In some embodiments, as shown in FIG. 2C, the method 200 further includes the following step: Step 206: Determine, in response to a third triggering instruction of a control in the second page, a second page jump path corresponding to the control in the second page according to the first operating data; obtain corresponding third operating data from the server according to the second page jump path in response to that operating data corresponding to the second page jump path is not in the first operating data or the second operating data; and execute the third operating data, and display a third page according to the third operating data, the third operating data including the operating data corresponding to the second page jump path.

In an embodiment of this application, the third operating data includes third logical operating data and third view operating data corresponding to the second page jump path. In an embodiment of this application, the third logical operating data is third logical code, and the third view operating data is third view layer code.

For example, according to the foregoing description, when a user clicks a "cc" news video introduction icon in the page that plays the "bb" movie video, that is, the user gives a third triggering instruction to watch the "cc" news video, the WeChat APP, in response to the third triggering instruction of the control, determines a page jump path such as "ddd" according to the correspondence between the control stored in the first operating data and the page jump path, and uses the page jump path as a page identifier of playing the "cc" news video. The WeChat APP first determines whether there is operating data corresponding to "ddd" through search in the first operating data and the second operating data, and then transmits an obtaining request to the server when the operating data is in neither the first operating data nor the second operating data, the obtaining request carrying the page jump path "ddd". The server searches for subpackage code corresponding to the page jump path "ddd" according to the page jump path "ddd", that is, the third operating data. The subpackage code includes the operating data corresponding to the page jump path "ddd". The server transmits the third operating data to the WeChat APP. The third operating data may be stored in the local storage area of the terminal device. The WeChat APP obtains the third operating data from the local storage area, and injects the third logical code corresponding to the page jump path "ddd" into the JavaScriptCore operating container, and injects the third view layer code corresponding to the page jump path "ddd" after the JavaScriptCore operating container executes the third logical code, to display a third page of the video applet, that is, a page that plays the "cc" news video to the user.

In addition, the second page jump path that corresponds to the control in the second page may also be determined according to the second operating data.

In some embodiments, as shown in FIG. 2C, the method 200 further includes the following step: Step 207: Execute the operating data corresponding to the second page jump path in response to that the operating data corresponding to the second page jump path is in the first operating data and the second operating data, and display the third page according to the operating data corresponding to the second page jump path.

For example, according to the foregoing description, when the operating data is in the first operating data or the second operating data, the logical code corresponding to the page jump path "ddd" is injected into the JavaScriptCore operating container. The view layer code corresponding to the page jump path "ddd" is injected into the JavaScriptCore operating container after the JavaScriptCore operating container executes the logical code, to display the third page of the video applet, that is, the page that plays the "cc" news video to the user.

When the operating data is in the first operating data, because only starting logical code and starting view layer code may be executed when the applet is initialized, that is, started, other logical code and corresponding view layer code in the first operating data need to be injected into the operating container when the other logical code and the corresponding view layer code are selected. The operating status of the second operating data is the same as the operating status of the first operating data, and details are not described herein again.

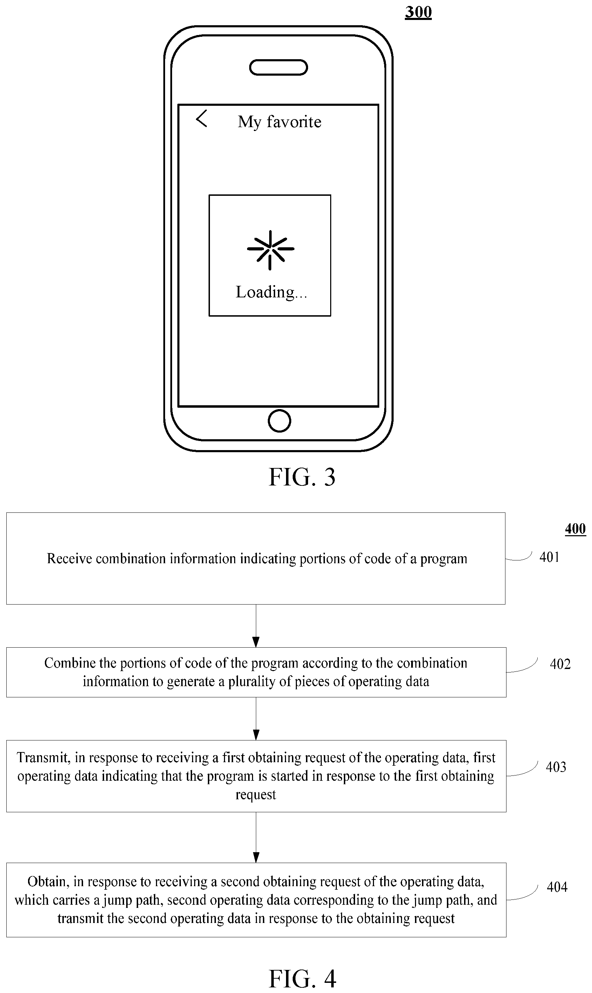

In a process in which the user uses the applet, when a page is opened after the WeChat APP executes subpackage code, loading the page appears briefly, generally within 1 second. FIG. 3 shows an example 300 of the loading the page, and then the page under the subpackage is displayed in front of the user.

The upper limit of the total size of the starting package and a plurality of subpackages of the applet is increased from 2 MB to 4 MB. The service side can add more applet functions, and the user can obtain a richer experience on the applet. The starting package may be controlled to a smaller size by properly splitting the starting package to optimize the starting speed of the applet.

According to the invention, a program operating method is provided, and is applied to a server 101. As shown in FIG. 4, the method 400 includes the following steps:
Step 401: Receive combination information indicating portions of code of a program.

According to the invention, a developer splits the code of the applet according to functions, into a plurality of code files, that is, portions of code, and store the plurality of code files in the server respectively. The developer completes the development of the subpackages by configuring paths of a combination of subpackages, that is, the combination information under app.json (an applet configuration file), and the developer releases the subpackages with one click by using a WeChat developer tool without considering any issue at the serving end. The server receives the configuration file transmitted by the WeChat developer tool, that is, obtains the combination information.

The following description is a code example in the configuration file:

```
   {
    "pages":[
      "pages/index",
       "pages/logs"
       ],
       "subpackages":[
          {
            "root": "packageA",
          "pages":[
            "pages/cat",
            "pages/dog"
          ]
        },{
        "root":"packageB",
        "pages":[
          "pages/apple",
          "pages/banana",
         ]
       }
      ]
   }
```

Step 402: Combine the portions of code of the program according to the combination information to generate a plurality of pieces of operating data.

According to the invention, the server combines a plurality of code files according to the split information of the starting package and the subpackages in the configuration file to generate the starting package and a plurality of subpackages of the applet, which may be stored in different CDN servers 101a. The storage addresses thereof may be, for example: https://servicewhat.xx.com/wxidxxx/main.wxapkg,
https://servicewhat.xx.com/wxidxxx/subpackage1.wxapkg, and
https://servicewhat.xx.com/wxidxxx/subpackage2.wxapkg.

Step 403: Transmit, in response to receiving a first obtaining request of the operating data, first operating data indicating that the program is started in response to the first obtaining request.

According to the invention, when the server receives an obtaining request that is transmitted by the WeChat APP run on the terminal device, where the obtaining request carries an identifier of the applet, the server transmits the starting package of the applet to the WeChat APP in response to the obtaining request.

Step 404: Obtain, in response to receiving a second obtaining request of the operating data, which carries a jump path, second operating data corresponding to the jump path, and transmit the second operating data in response to the obtaining request.

According to the invention, the WeChat APP transmits a code obtaining request to the server. The code obtaining request carries the page jump path "aaa". The server searches for subpackage code corresponding to the page jump path "aaa" according to the page jump path "aaa", that is, the second operating data. The subpackage code includes the operating data corresponding to the page jump path "aaa". The server transmits the second operating data to the WeChat APP.

The technical solution provided by this embodiment of this application has low development costs. A developer can combine and pack split code without performing a plurality of configurations, and store the split code in the server without considering browser caching.

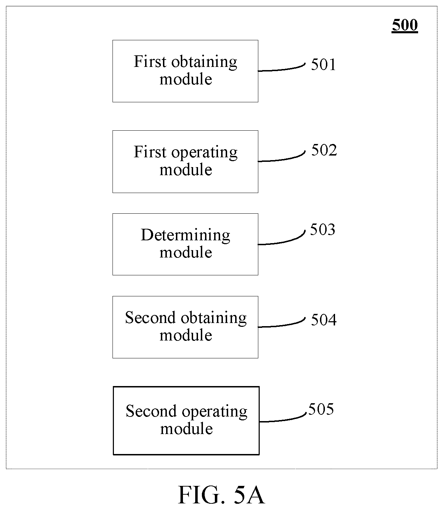

Based on the foregoing embodiment, according to an embodiment of this application, a program operating apparatus is further provided, and is applied to a client run on a computing device, such as a social APP. As shown in FIG. 5A, the apparatus 500 includes: a first obtaining module 501, a first operating module 502, a determining module 503, a second obtaining module 504 and a second operating module 505. Functions of the modules are specifically as follows:

The first obtaining module 501 obtains, in response to a first triggering instruction of a program, first operating data of the program from a server, the first operating data including at least code used for starting the program.

The first operating module 502 executes the first operating data, and displays a first page of the program according to the first operating data.

The determining module 503 determines, in response to a second triggering instruction of a control in the first page, a second page identifier corresponding to the control.

The second obtaining module 504 obtains second operating data from the server according to the second page identifier in response to that operating data corresponding to the second page identifier is not in the first operating data, the second operating data including the operating data corresponding to the second page identifier.

The second operating module 505 executes the second operating data, and displays a second page according to the second operating data, the second operating data including portions of code of the program.

In some embodiments, the second operating module 505 executes the operating data corresponding to the second page identifier in response to that the operating data corresponding to the second page identifier is in the first operating data, and displays the second page according to the operating data corresponding to the second page identifier.

In some embodiments, the first obtaining module 501 includes: a transmission unit, transmitting an obtaining request to the server, the obtaining request carrying an identifier of the program; and a receiving unit, receiving the first operating data transmitted by the server in response to the obtaining request.

In some embodiments, the first operating module 502 executes the first operating data by using a operating container; and the second operating module 505 executes the second operating data by using the operating container.

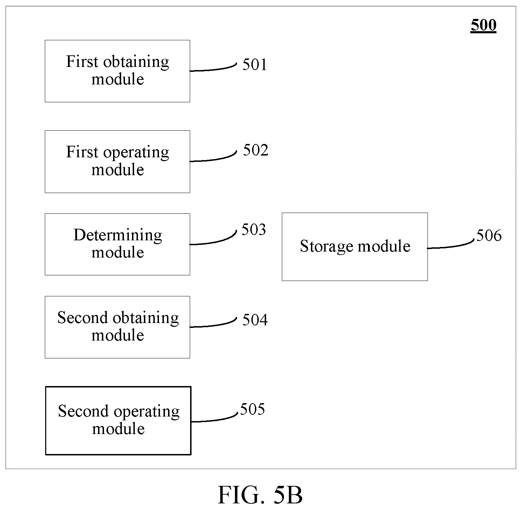

In some embodiments, as shown in FIG. 5B, the apparatus 500 further includes: a storage module 506, storing the obtained first operating data in a local storage area; the first obtaining module 501 obtains the first operating data in the local storage area, and transmits the first operating data to the operating container; and the first operating module 502 performs the step of executing the first operating data by using the operating container after the first operating data is transmitted to the operating container.

In some embodiments, the first operating data includes first logical operating data and first view operating data corresponding to the first page, and the first obtaining module 501 includes: a first obtaining unit, obtaining the first logical operating data in the local storage area, and transmitting the first logical operating data to the operating container; and a second obtaining unit, obtaining the first view operating data in the local storage area, and transmitting the first view operating data to the operating container after the operating container executes the first logical operating data, and then displaying the first page of the program.

In some embodiments, the first operating data includes page jump paths corresponding to a plurality of controls, the determining module 503 determines a first page jump path according to the control and takes the first page jump path as the second page identifier; and the second obtaining module 504 obtains the second operating data from the server according to the first page jump path in response to that operating data corresponding to the first page jump path is determined to be not in the first operating data.

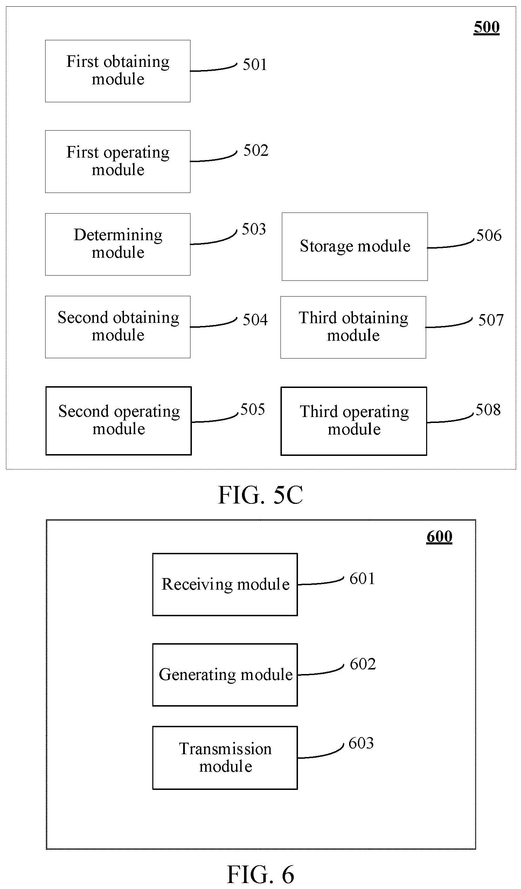

In some embodiments, the determining module 503 determines, in response to a third triggering instruction of a control in the second page, a second page jump path corresponding to the control in the second page according to the first operating data; as shown in FIG. 5C, the apparatus 500 further includes: a third obtaining module 507, obtaining corresponding third operating data from the server according to the second page jump path in response to that operating data corresponding to the second page jump path is not in the first operating data or the second operating data, the third operating data including the operating data corresponding to the second page jump path; and a third operating module 508, executing the third operating data, and displaying the third page according to the third operating data.

In some embodiments, the first operating module 502 executes the operating data corresponding to the second page jump path in response to that the operating data corresponding to the second page jump path is in the first operating data, and displays the third page according to the operating data corresponding to the second page jump path.

In some embodiments, the first operating data further includes second logical operating data and second view operating data corresponding to a plurality of page jump paths, and the first obtaining module 501 obtains the second logical operating data that corresponds to the first page jump path and that is in the local storage area, and transmits the second logical operating data to the operating container in response to that the operating data corresponding to the first page jump path is determined to be in the first operating data; and obtains the second view operating data that corresponds to the first page jump path and that is in the local storage area, and transmits the second view operating data to the operating container after the operating container executes the second logical operating data corresponding to the first page jump path, and then displays the second page of the program.

In some embodiments, the second operating data includes second logical operating data and second view operating data corresponding to a plurality of page jump paths, and the storage module 506 stores the obtained second operating data in a local storage area. The second operating module 505 includes: an obtaining unit, obtaining the second logical operating data that corresponds to a first page jump path and that is in the local storage area, and transmitting the second logical operating data to a operating container; and obtaining the second view operating data that corresponds to the first page jump path and that is in the local storage area, and transmitting the second view operating data to the operating container after the operating container executes the second logical operating data corresponding to the first page jump path, and then displaying the second page.

Based on the foregoing embodiment, according to an embodiment of this application, a program operating apparatus is further provided, and is applied to a server 101. As shown in FIG. 6, the apparatus 600 includes: a receiving module 601, a generating module 602 and a transmission module 603. Functions of the modules are specifically as follows:
The receiving module 601 receives combination information indicating portions of code of a program.

The generating module 602 combines the portions of code of the program according to the combination information to generate a plurality of pieces of operating data.

The transmission module 603 transmits, in response to that first obtaining request of the operating data is received, first operating data indicating that the program is started in response to the first obtaining request.

The transmission module 603 obtains, in response to that a second obtaining request, which carries a jump path, of the operating data is received, second operating data corresponding to the jump path, and transmits the second operating data in response to the second obtaining request.

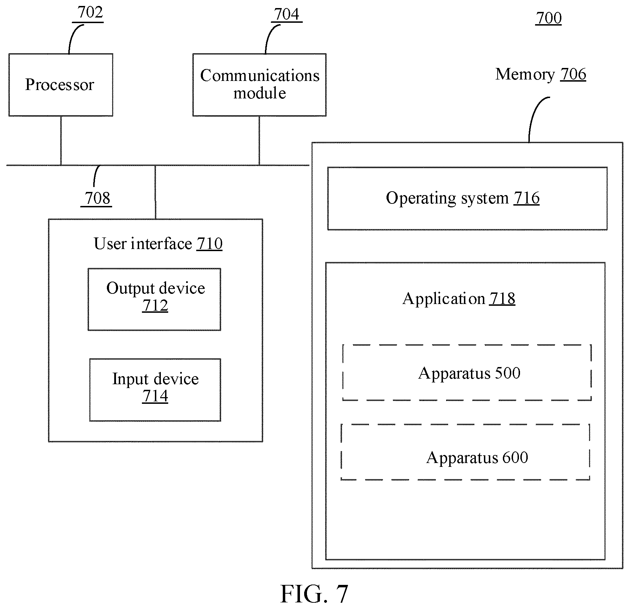

FIG. 7 is a structural composition diagram of a computing device 700 in which a operating apparatus 500 and/or an operating apparatus 600 is located. The computing device 700 may be a server or a terminal device. As shown in FIG. 7, the computing device includes one or more processors (CPU) 702, a communications module 704, a memory 706, a user interface 710, and a communications bus 708 for interconnecting the components.

The processor 702 may receive and transmit data by using the communications module 704 to implement network communication and/or local communication.

The user interface 710 includes one or more output devices 712, including one or more speakers and/or one or more visual displays. The user interface 710 may further include one or more input devices 714, including, such as, a keyboard, a mouse, a voice command input unit or a speaker, a touch screen display, a touch-sensitive panel, a gesture capture camera, another input button, a control, or the like.

The memory 706 may be a high-speed random access memory such as a dynamic random access memory (DRAM), a static random-access memory (SRAM), a double data rate random-access memory (DDR RAM), or another random access solid-state storage device; or a non-volatile memory such as one or more magnetic storage devices, an optical disc storage device, a flash memory, or another non-volatile solid-state storage device.

The memory 706 stores an instruction set that can be performed by the memory 702, and includes:
an operating system 716, including a program configured to process various basic system services and execute a hardware-related task; and
an application 718, including various application programs, such an application program being capable of implementing the processing processes in the foregoing embodiments, and including, for example, some of the modules or all the modules in the operating apparatus 500 as shown in FIG. 5A to FIG. 5C, at least one of the modules 501 to 508 storing a machine executable instruction, and the processor 702, by executing a machine executable instruction in at least one of the modules 501 to 508 in the memory 706, implementing a function of the at least one of the modules 501 to 508.

Such an application program can include, for example, some of the modules or all the modules in the operating apparatus 600 as shown in FIG. 6. At least one of the modules 601 to 603 can store a machine executable instruction. The processor 702, by executing a machine executable instruction in at least one of the modules 601 to 603 in the memory 706, implementing a function of the at least one of the modules 601 to 603.

Not all of the steps and modules in the foregoing processes and structural diagrams are necessary, and certain steps or modules can be neglected according to actual requirements. An execution sequence of the steps is not fixed and may be adjusted according to requirements. Division of the modules is merely functional division for ease of description. During actual implementation, one module may be implemented separately by a plurality of modules, and functions of the plurality of modules may alternatively be implemented by the same module. The modules may be located in the same device, or may be located in different devices.

A hardware module in each embodiment may be implemented in a hardware manner or in a hardware platform combining with software manner. The software includes a machine-readable instruction, stored in a non-volatile storage medium. Therefore, the embodiments may alternatively be implemented in a form of a software product.

In each embodiment, hardware may be implemented by hardware of dedicated hardware or hardware executing the machine-readable instruction. For example, the hardware may be a specifically designed permanent circuit or logical device (for example, a dedicated processor, such as an FPGA or an ASIC) for completing a specific operation. The hardware may alternatively include a programmable logical device or circuit (for example, including a general processor or another programmable processor) configured temporarily by software and configured to perform a specific operation.

In addition, each example of this application may be implemented by a data processing program executed by a data processing device such as a computer. Apparently, data processing programs constitutes this application. In addition, generally, a data processing program stored in a storage medium is directly read from the storage medium for execution or the program is installed on or replicated to a storage device (for example, a hard disk or a memory) of a data processing device for execution. Therefore, such a storage medium constitutes this application. This application further provides a non-volatile the storage medium storing a data processing program. The data processing program may be configured to perform any instance in the foregoing method embodiments in this application.

The machine-readable instruction corresponding to a module in FIG. 5 and/or FIG. 6 may enable an operating system and the like operated on a computer to complete some or all operations described herein. The non-volatile computer-readable storage medium may be a memory inserted into an expansion board inserted in the computer or a memory written to an expansion unit connected to the computer. A central processing unit (CPU) or the like installed on the expansion board or the expansion unit may perform some and all actual operations according to an instruction.

In addition, modules in the embodiments of this application may be integrated into one processing unit, or each of the modules may exist alone physically, or two or more apparatus or modules may be integrated into one unit. The integrated unit may be implemented in the form of hardware, or may be implemented in the form of a software function unit.

## Claims

1. A program operating method for a child application, performed by a computing device (103, 104), wherein the computing device is installed with an operating system, the child application is an application program that runs with dependence on a parent application, and the child application is an applet, the method comprising:
obtaining (201), in response to a first triggering instruction of the applet, first operating data of the applet from a server (101), the first operating data comprising at least code used for starting the applet included in a starting package, and wherein the first operating data includes page jump paths corresponding to a plurality of controls;
executing (202) the first operating data, and displaying a first page of the applet according to the first operating data, wherein the first page is a starting page of the applet;
determining (203), in response to a second triggering instruction of a control in the first page, a second page identifier corresponding to the control, and the second page is a jump page other than the starting page, wherein the determining a second page identifier corresponding to the control in the first page comprises determining (2031) a first page jump path according to the control in the first page and taking the first page jump path as the second page identifier;
obtaining (204) second operating data from the server according to the second page identifier in response to that operating data corresponding to the second page identifier is not in the first operating data, the second operating data comprising the operating data corresponding to the second page identifier, wherein
the obtaining second operating data from the server according to the second page identifier in response to that operating data corresponding to the second page identifier is not in the first operating data comprises:
obtaining (2041) the second operating data from the server according to the first page jump path in response to that operating data corresponding to the first page jump path is determined to be not in the first operating data; and
executing (205) the second operating data, and displaying a second page according to the second operating data, the second operating data comprising portions of code of the applet,
wherein the server (101) is configured to
receive (401) combination information indicating portions of code within the applet, wherein the portions of code are obtained by a developer splitting the code of the applet into a plurality of code files according to functions and storing the plurality of code files in the server, and by the developer completing the development of subpackages by configuring paths of a combination of subpackages in an applet configuration file comprising the combination information, and by the developer transmitting the subpackages to the server by using a developer tool of the parent application;
combine the portions of code of the applet according to the combination information to generate a plurality of pieces of operating data, wherein the portions of the code are combined according to the split information of the starting package and the subpackages in the configuration file to generate the starting package and a plurality of subpackages of the applet, which are stored in different Content Delivery Network, CDN, servers;
transmit (403), in response to receiving a first obtaining request of the operating data, first operating data indicating that the program is started in response to the first obtaining request, wherein, when the server receives an obtaining request that is transmitted by the parent application run on the computing device (103, 104), where the obtaining request carries an identifier of the applet, the server transmits the starting package of the applet to the parent application in response to the obtaining request; and
obtain (404), in response to receiving a second obtaining request of the operating data, which carries a jump path, second operating data corresponding to the jump path, and transmit the second operating data in response to the obtaining request.

2. The method according to claim 1, **characterized in that** the obtaining first operating data of the program from a server (101) comprises:
transmitting an obtaining request to the server (101), the obtaining request carrying an identifier of the program; and
receiving the first operating data transmitted by the server (101) in response to the obtaining request.

3. The method according to claim 1, **characterized by** the executing the first operating data comprising: executing the first operating data by using an operating container, in particular a JavaScriptCore operating container; and
the executing the second operating data comprising: executing the second operating data by using the operating container.

4. The method according to claim 3, **characterized by** further comprising:
storing the obtained first operating data in a local storage area;
obtaining the first operating data in the local storage area, and transmitting the first operating data to the operating container; and
performing the operation of executing the first operating data by using the operating container after the first operating data is transmitted to the operating container.

5. The method according to claim 4, **characterized by** the first operating data comprising first logical operating data and first view operating data corresponding to the first page; and
the obtaining the first operating data in the local storage area, and transmitting the first operating data to the operating container comprising:
obtaining the first logical operating data in the local storage area, and transmitting the first logical operating data to the operating container; and
obtaining the first view operating data in the local storage area, and transmitting the first view operating data to the operating container after the operating container executes the first logical operating data, and then displaying the first page of the program.

6. The method according to claim 1, **characterized by** further comprising:
Determining (206), in response to a third triggering instruction of a control in the second page, a second page jump path corresponding to the control in the second page according to the first operating data;
obtaining (206) corresponding third operating data from the server according to the second page jump path in response to that operating data corresponding to the second page jump path is not in the first operating data or the second operating data, the third operating data comprising the operating data corresponding to the second page jump path; and
executing (206) the third operating data, and displaying a third page of the program according to the third operating data.

7. The method according to claim 6, **characterized by** further comprising:
executing (207) the operating data corresponding to the second page jump path in response to that the operating data corresponding to the second page jump path is in the first operating data, and displaying the third page according to the operating data corresponding to the second page jump path.

8. The method according to claim 5, **characterized by**
the first operating data further comprising second logical operating data and second view operating data corresponding to a plurality of page jump paths; and
the method further comprising:
obtaining the second logical operating data that corresponds to the first page jump path and that is in the local storage area, and transmitting the second logical operating data to the operating container in response to that the operating data corresponding to the first page jump path is determined to be in the first operating data; and
obtaining the second view operating data that corresponds to the first page jump path and that is in the local storage area, and transmitting the second view operating data to the operating container after the operating container executes the second logical operating data corresponding to the first page jump path, and then displaying the second page of the program.

9. The method according to claim 1, **characterized by** the second operating data comprising second logical operating data and second view operating data corresponding to a plurality of page jump paths;
the method further comprising:
storing the obtained second operating data in a local storage area; and
the executing the second operating data, and displaying a second page according to the second operating data comprising:
obtaining the second logical operating data that corresponds to a first page jump path and that is in the local storage area, and transmitting the second logical operating data to an operating container, in particular a JavaScriptCore operating container; and
obtaining the second view operating data that corresponds to the first page jump path and that is in the local storage area, and transmitting the second view operating data to the operating container after the operating container executes the second logical operating data corresponding to the first page jump path, and then displaying the second page.

10. A computing device (700), **characterized by** comprising a memory (706), a processor (702), and a computer program (718) that is stored in the memory and that is run on the processor (702); and the processor (702), when executing the computer program (718), implementing the method according to any one of claims 1 to 9.

11. A storage medium (706) storing one or more programs, **characterized by** the one or more programs comprising instructions, and the instructions, when executed by a computing device (700), causing the computing device (700) to perform the method according to any one of claims 1 to 9.

## Patentansprüche

1. Programmbetriebsverfahren für eine untergeordnete Anwendung, das von einer Rechenvorrichtung (103, 104) durchgeführt wird, wobei die Rechenvorrichtung mit einem Betriebssystem installiert ist, die untergeordnete Anwendung ein Anwendungsprogramm ist, das in Abhängigkeit von einer übergeordneten Anwendung läuft, und die untergeordnete Anwendung ein Applet ist, wobei das Verfahren umfasst:
Erhalten (201) von ersten Betriebsdaten des Applets von einem Server (101) als Reaktion auf eine erste Auslöseanweisung des Applets, wobei die ersten Betriebsdaten mindestens einen Code umfassen, der zum Starten des Applets verwendet wird und in einem Startpaket enthalten ist, und wobei die ersten Betriebsdaten Seitensprungpfade einschließen, die einer Vielzahl von Steuerelementen entsprechen;
Ausführen (202) der ersten Betriebsdaten, und Anzeigen einer ersten Seite des Applets gemäß den ersten Betriebsdaten, wobei die erste Seite eine Startseite des Applets ist;
Bestimmen (203), als Reaktion auf eine zweite Auslöseanweisung eines Steuerelements auf der ersten Seite, einer zweiten Seitenkennung, die dem Steuerelement entspricht, und wobei die zweite Seite eine andere Sprungseite als die Startseite ist, wobei das Bestimmen einer zweiten Seitenkennung, die dem Steuerelement auf der ersten Seite entspricht, das Bestimmen (2031) eines ersten Seitensprungpfades gemäß dem Steuerelement auf der ersten Seite und das Verwenden des ersten Seitensprungpfades als die zweite Seitenkennung umfasst;
Erhalten (204) von zweiten Betriebsdaten von dem Server gemäß der zweiten Seitenkennung als Reaktion darauf, dass Betriebsdaten, die der zweiten Seitenkennung entsprechen, nicht in den ersten Betriebsdaten enthalten sind, wobei die zweiten Betriebsdaten die Betriebsdaten umfassen, die der zweiten Seitenkennung entsprechen, wobei
das Erhalten von zweiten Betriebsdaten von dem Server gemäß der zweiten Seitenkennung als Reaktion darauf, dass Betriebsdaten, die der zweiten Seitenkennung entsprechen, nicht in den ersten Betriebsdaten enthalten sind, Folgendes umfasst:
Erhalten (2041) der zweiten Betriebsdaten von dem Server gemäß dem ersten Seitensprungpfad als Reaktion darauf, dass Betriebsdaten, die dem ersten Seitensprungpfad entsprechen, als nicht in den ersten Betriebsdaten enthalten bestimmt werden; und
Ausführen (205) der zweiten Betriebsdaten, und Anzeigen einer zweiten Seite gemäß den zweiten Betriebsdaten, wobei die zweiten Betriebsdaten Codeabschnitte des Applets umfassen,
wobei der Server (101) konfiguriert ist zum
Empfangen (401) von Kombinationsinformationen, die Codeabschnitte innerhalb des Applets angeben, wobei die Codeabschnitte dadurch erhalten werden, dass ein Entwickler den Code des Applets in eine Vielzahl von Codedateien gemäß Funktionen aufteilt und die Vielzahl von Codedateien in dem Server speichert, und dadurch, dass der Entwickler die Entwicklung von Unterpaketen abschließt, indem er Pfade einer Kombination von Unterpaketen in einer die Kombinationsinformationen umfassenden Applet-Konfigurationsdatei konfiguriert, und dadurch, dass der Entwickler die Unterpakete an den Server überträgt, indem er ein Entwicklerwerkzeug der übergeordneten Anwendung verwendet;
Kombinieren der Codeabschnitte des Applets gemäß den Kombinationsinformationen, um eine Vielzahl von Betriebsdatenstücken zu erzeugen, wobei die Codeabschnitte gemäß den Aufteilungsinformationen des Startpakets und der Unterpakete in der Konfigurationsdatei kombiniert werden, um das Startpaket und eine Vielzahl von Unterpaketen des Applets zu erzeugen, die in verschiedenen Content Delivery Network-Servern (CDN-Servern) gespeichert sind;
Übertragen (403), als Reaktion auf den Empfang einer ersten Abrufanforderung der Betriebsdaten, von ersten Betriebsdaten, die angeben, dass das Programm als Reaktion auf die erste Abrufanforderung gestartet ist, wobei der Server, wenn er eine Abrufanforderung empfängt, die von der auf der Rechenvorrichtung (103, 104) ausgeführten übergeordneten Anwendung übertragen wird, wobei die Abrufanforderung eine Kennung des Applets trägt, das Startpaket des Applets als Reaktion auf die Abrufanforderung an die übergeordnete Anwendung überträgt; und
Erhalten (404), als Reaktion auf den Empfang einer zweiten Abrufanforderung der Betriebsdaten, die einen Sprungpfad trägt, von zweiten Betriebsdaten, die dem Sprungpfad entsprechen, und Übertragen der zweiten Betriebsdaten als Reaktion auf die Abrufanforderung.

2. Verfahren nach Anspruch 1, **dadurch gekennzeichnet, dass** das Erhalten von ersten Betriebsdaten des Programms von einem Server (101) Folgendes umfasst:
Übertragen einer Abrufanforderung an den Server (101), wobei die Abrufanforderung eine Kennung des Programms trägt; und
Empfangen der ersten Betriebsdaten, die von dem Server (101) übertragen wurden, als Reaktion auf die Abrufanforderung.

3. Verfahren nach Anspruch 1, **dadurch gekennzeichnet, dass** das Ausführen der ersten Betriebsdaten umfasst: Ausführen der ersten Betriebsdaten unter Verwendung eines Betriebscontainers, insbesondere eines JavaScriptCore-Betriebscontainers; und
das Ausführen der zweiten Betriebsdaten umfasst: Ausführen der zweiten Betriebsdaten unter Verwendung des Betriebscontainers.

4. Verfahren nach Anspruch 3, **dadurch gekennzeichnet, dass** es ferner umfasst:
Speichern der erhaltenen ersten Betriebsdaten in einem lokalen Speicherbereich;
Erhalten der ersten Betriebsdaten in dem lokalen Speicherbereich und Übertragen der ersten Betriebsdaten an den Betriebscontainer; und
Durchführen des Vorgangs des Ausführens der ersten Betriebsdaten unter Verwendung des Betriebscontainers, nachdem die ersten Betriebsdaten an den Betriebscontainer übertragen wurden.

5. Verfahren nach Anspruch 4, **dadurch gekennzeichnet, dass** die ersten Betriebsdaten erste logische Betriebsdaten und erste Ansichtsbetriebsdaten umfassen, die der ersten Seite entsprechen; und
das Erhalten der ersten Betriebsdaten in dem lokalen Speicherbereich, und Übertragen der ersten Betriebsdaten an den Betriebscontainer umfasst:
Erhalten der ersten logischen Betriebsdaten in dem lokalen Speicherbereich, und Übertragen der ersten logischen Betriebsdaten an den Betriebscontainer; und
Erhalten der ersten Ansichtsbetriebsdaten in dem lokalen Speicherbereich, und Übertragen der ersten Ansichtsbetriebsdaten an den Betriebscontainer, nachdem der Betriebscontainer die ersten logischen Betriebsdaten ausführt, und dann Anzeigen der ersten Seite des Programms.

6. Verfahren nach Anspruch 1, **dadurch gekennzeichnet, dass** es ferner umfasst:
Bestimmen (206), als Reaktion auf eine dritte Auslöseanweisung eines Steuerelements auf der zweiten Seite, eines zweiten Seitensprungpfades, der dem Steuerelement auf der zweiten Seite entspricht, gemäß den ersten Betriebsdaten;
Erhalten (206) von entsprechenden dritten Betriebsdaten von dem Server gemäß dem zweiten Seitensprungpfad als Reaktion darauf, dass Betriebsdaten, die dem zweiten Seitensprungpfad entsprechen, nicht in den ersten Betriebsdaten oder den zweiten Betriebsdaten enthalten sind, wobei die dritten Betriebsdaten die Betriebsdaten umfassen, die dem zweiten Seitensprungpfad entsprechen; und
Ausführen (206) der dritten Betriebsdaten, und Anzeigen einer dritten Seite des Programms gemäß den dritten Betriebsdaten.

7. Verfahren nach Anspruch 6, **dadurch gekennzeichnet, dass** es ferner umfasst:
Ausführen (207) der Betriebsdaten, die dem zweiten Seitensprungpfad entsprechen, als Reaktion darauf, dass die Betriebsdaten, die dem zweiten Seitensprungpfad entsprechen, in den ersten Betriebsdaten enthalten sind, und Anzeigen der dritten Seite gemäß den Betriebsdaten, die dem zweiten Seitensprungpfad entsprechen.

8. Verfahren nach Anspruch 5, **dadurch gekennzeichnet, dass** die ersten Betriebsdaten ferner zweite logische Betriebsdaten und zweite Ansichtsbetriebsdaten umfassen, die einer Vielzahl von Seitensprungpfaden entsprechen; und
das Verfahren ferner umfasst:
Erhalten der zweiten logischen Betriebsdaten, die dem ersten Seitensprungpfad entsprechen und sich in dem lokalen Speicherbereich befinden, und Übertragen der zweiten logischen Betriebsdaten an den Betriebscontainer als Reaktion darauf, dass die Betriebsdaten, die dem ersten Seitensprungpfad entsprechen, als in den ersten Betriebsdaten enthalten bestimmt werden; und
Erhalten der zweiten Ansichtsbetriebsdaten, die dem ersten Seitensprungpfad entsprechen und die sich in dem lokalen Speicherbereich befinden, und Übertragen der zweiten Ansichtsbetriebsdaten an den Betriebscontainer, nachdem der Betriebscontainer die zweiten logischen Betriebsdaten ausführt, die dem ersten Seitensprungpfad entsprechen, und dann Anzeigen der zweiten Seite des Programms.

9. Verfahren nach Anspruch 1, **dadurch gekennzeichnet, dass** die zweiten Betriebsdaten zweite logische Betriebsdaten und zweite Ansichtsbetriebsdaten umfassen, die einer Vielzahl von Seitensprungpfaden entsprechen;
wobei das Verfahren ferner umfasst:
Speichern der erhaltenen zweiten Betriebsdaten in einem lokalen Speicherbereich; und
das Ausführen der zweiten Betriebsdaten, und Anzeigen einer zweiten Seite gemäß den zweiten Betriebsdaten umfassend:
Erhalten der zweiten logischen Betriebsdaten, die einem ersten Seitensprungpfad entsprechen und sich in dem lokalen Speicherbereich befinden, und Übertragen der zweiten logischen Betriebsdaten an einen Betriebscontainer, insbesondere einen JavaScriptCore-Betriebscontainer; und
Erhalten der zweiten Ansichtsbetriebsdaten, die dem ersten Seitensprungpfad entsprechen und die sich in dem lokalen Speicherbereich befinden, und Übertragen der zweiten Ansichtsbetriebsdaten an den Betriebscontainer, nachdem der Betriebscontainer die zweiten logischen Betriebsdaten ausführt, die dem ersten Seitensprungpfad entsprechen, und dann Anzeigen der zweiten Seite.

10. Rechenvorrichtung (700), **dadurch gekennzeichnet, dass** sie einen Speicher (706), einen Prozessor (702) und ein Computerprogramm (718) umfasst, das in dem Speicher gespeichert ist und auf dem Prozessor (702) ausgeführt wird; und der Prozessor (702), wenn er das Computerprogramm (718) ausführt, das Verfahren nach einem der Ansprüche 1 bis 9 implementiert.

11. Speichermedium (706), das ein oder mehrere Programme speichert, **dadurch gekennzeichnet, dass** das eine oder die mehreren Programme Anweisungen umfassen, und die Anweisungen, wenn sie von einer Rechenvorrichtung (700) ausgeführt werden, die Rechenvorrichtung (700) veranlassen, das Verfahren nach einem der Ansprüche 1 bis 9 durchzuführen.

## Revendications

1. Procédé d'exploitation de programme pour une application enfant, réalisé par un dispositif de calcul (103, 104), dans lequel le dispositif de calcul est installé avec un système d'exploitation, l'application enfant est un programme d'application qui s'exécute en fonction d'une application parent, et l'application enfant est un applet, le procédé comprenant :
l'obtention (201), en réponse à un première instruction de déclenchement de l'applet, d'une première donnée d'exploitation de l'applet depuis un serveur (101), la première donnée d'exploitation comprenant au moins un code utilisé pour démarrer l'applet inclus dans un paquet de démarrage, et dans lequel la première donnée d'exploitation inclut des chemins de saut de page correspondant à une pluralité de commandes ;
l'exécution (202) de la première donnée d'exploitation, et l'affichage d'une première page de l'applet en fonction de la première donnée d'exploitation, dans lequel la première page est une page de démarrage de l'applet ;
la détermination (203), en réponse à une deuxième instruction de déclenchement d'une commande dans la première page, d'un identifiant de deuxième page correspondant à la commande, et la deuxième page est une page de saut autre que la page de démarrage, dans lequel la détermination d'un identifiant de deuxième page correspondant à la commande dans la première page comprend la détermination (2031) d'un premier chemin de saut de page en fonction de la commande dans la première page et la prise en considération du premier chemin de saut de page en tant qu'identifiant de deuxième page ;
l'obtention (204), d'une deuxième donnée d'exploitation depuis le serveur en fonction de l'identifiant de deuxième page en réponse au fait qu'une donnée d'exploitation correspondant à l'identifiant de deuxième page n'est pas dans la première donnée d'exploitation, la deuxième donnée d'exploitation comprenant la donnée d'exploitation correspondant à l'identifiant de deuxième page, dans lequel
l'obtention de la deuxième donnée d'exploitation depuis le serveur en fonction de l'identifiant de deuxième page en réponse au fait qu'une donnée d'exploitation correspondant à l'identifiant de deuxième page n'est pas dans la première donnée d'exploitation comprend :
l'obtention (2041) de la deuxième donnée d'exploitation depuis le serveur en fonction du premier chemin de saut de page en réponse au fait qu'une donnée d'exploitation correspondant au premier chemin de saut de page est déterminée comme n'étant pas dans la première donnée d'exploitation ; et
l'exécution (205) de la deuxième donnée d'exploitation, et l'affichage d'une deuxième page en fonction de la deuxième donnée d'exploitation, la deuxième donnée d'exploitation comprenant des portions de code de l'applet,
dans lequel le serveur (101) est configuré pour
recevoir (401) une information de combinaison indiquant des portions de code à l'intérieur de l'applet, dans lequel les portions de code sont obtenues par le fait qu'un développeur fractionne le code de l'applet en une pluralité de fichiers code en fonction de fonctions et stocke la pluralité de fichiers code dans le serveur, et par le fait que le développeur achève le développement de sous-paquets en configurant des chemins d'une combinaison de sous-paquets dans un fichier de configuration d'applet comprenant l'information de combinaison, et par le fait que le développeur transmet les sous-paquets au serveur à l'aide d'un outil de développeur de l'application parent ;
combiner les portions de code de l'applet en fonction de l'information de combinaison pour produire une pluralité de parties de donnée d'exploitation, dans lequel les portions du code sont combinées en fonction de l'information de fractionnement du paquet de démarrage et des sous-paquets dans le fichier de configuration pour produire le paquet de démarrage et une pluralité de sous-paquets de l'applet, qui sont stockés dans différents serveurs de Réseau de Diffusion de Contenu, RDC;
transmettre (403), en réponse à la réception d'une première requête d'obtention de la donnée d'exploitation, une première donnée d'exploitation indiquant que le programme est démarré en réponse à la première requête d'obtention, dans lequel, lorsque le serveur reçoit une requête d'obtention qui est transmise par l'application parent exécutée sur le dispositif de calcul (103, 104), où la requête d'obtention transporte un identifiant de l'applet, le serveur transmet le paquet de démarrage de l'applet à l'application parent en réponse à la requête d'obtention; et
obtenir (404), en réponse à la réception d'une seconde requête d'obtention de la donnée d'exploitation, qui transporte un chemin de saut, une deuxième donnée d'exploitation correspondant au chemin de saut, et transmettre la deuxième donnée d'exploitation en réponse à la requête d'obtention.

2. Procédé selon la revendication 1, **caractérisé en ce que** l'obtention de la première donnée d'exploitation du programme depuis un serveur (101) comprend :
la transmission d'une requête d'obtention au serveur (101), la requête d'obtention transportant un identifiant du programme; et
la réception de la première donnée d'exploitation transmise par le serveur (101) en réponse à la requête d'obtention.

3. Procédé selon la revendication 1, **caractérisé par le fait que** l'exécution de la première donnée d'exploitation comprend : l'exécution de la première donnée d'exploitation à l'aide d'un conteneur d'exploitation, en particulier un conteneur d'exploitation JavaScriptCore ; et
**le fait que** l'exécution de la deuxième donnée d'exploitation comprend : l'exécution de la deuxième donnée d'exploitation à l'aide du conteneur d'exploitation.

4. Procédé selon la revendication 3, **caractérisé par** le fait de comprendre en outre :
le stockage de la première donnée d'exploitation obtenue dans une zone de stockage locale;
l'obtention de la première donnée d'exploitation dans la zone de stockage locale, et la transmission de la première donnée d'exploitation au conteneur d'exploitation; et
la réalisation de l'opération d'exécution de la première donnée d'exploitation à l'aide du conteneur d'exploitation après que la première donnée d'exploitation a été transmise au conteneur d'exploitation.

5. Procédé selon la revendication 4, **caractérisé par le fait que** la première donnée d'exploitation comprend une première donnée d'exploitation logique et une première donnée d'exploitation de visualisation correspondant à la première page ; et
l'obtention de la première donnée d'exploitation dans la zone de stockage locale, et la transmission de la première donnée d'exploitation au conteneur d'exploitation comprenant :
l'obtention de la première donnée d'exploitation logique dans la zone de stockage locale, et la transmission de la première donnée d'exploitation logique au conteneur d'exploitation ; et
l'obtention de la première donnée d'exploitation de visualisation dans la zone de stockage locale, et la transmission de la première donnée d'exploitation de visualisation au conteneur d'exploitation après que le conteneur d'exploitation a exécuté la première donnée d'exploitation logique, puis l'affichage de la première page du programme.

6. Procédé selon la revendication 1, **caractérisé en ce qu'**il comprend en outre :
la détermination (206), en réponse à une troisième instruction de déclenchement d'une commande dans la deuxième page, d'un second chemin de saut de page correspondant à la commande dans la deuxième page en fonction de la première donnée d'exploitation ;
l'obtention (206) d'une troisième donnée d'exploitation correspondante depuis le serveur en fonction du second chemin de saut de page en réponse au fait qu'une donnée d'exploitation correspondant au second chemin de saut de page n'est pas dans la première donnée d'exploitation ou la deuxième donnée d'exploitation, la troisième donnée d'exploitation comprenant la donnée d'exploitation correspondant au second chemin de saut de page ; et
l'exécution (206) de la troisième donnée d'exploitation, et l'affichage d'une troisième page du programme en fonction de la troisième donnée d'exploitation.

7. Procédé selon la revendication 6, **caractérisé en ce qu'**il comprend en outre :
l'exécution (207) de la donnée d'exploitation correspondant au second chemin de saut de page en réponse au fait que la donnée d'exploitation correspondant au second chemin de saut de page est dans la première donnée d'exploitation, et l'affichage de la troisième page en fonction de la donnée d'exploitation correspondant au second chemin de saut de page.

8. Procédé selon la revendication 5, **caractérisé par le fait que** la première donnée d'exploitation comprend en outre une deuxième donnée d'exploitation logique et une deuxième donnée d'exploitation de visualisation correspondant à une pluralité de chemins de saut de page ; et
le procédé comprenant en outre :
l'obtention de la deuxième donnée d'exploitation logique qui correspond au premier chemin de saut de page et qui est dans la zone de stockage locale, et la transmission de la deuxième donnée d'exploitation logique au conteneur d'exploitation en réponse au fait que la donnée d'exploitation correspondant au premier chemin de saut de page est déterminée comme étant dans la première donnée d'exploitation; et
l'obtention de la deuxième donnée d'exploitation de visualisation qui correspond au premier chemin de saut de page et qui est dans la zone de stockage locale, et la transmission de la deuxième donnée d'exploitation de visualisation au conteneur d'exploitation après que le conteneur d'exploitation a exécuté la deuxième donnée d'exploitation logique correspondant au premier chemin de saut de page, puis l'affichage de la deuxième page du programme.

9. Procédé selon la revendication 1, **caractérisé par le fait que** la deuxième donnée d'exploitation comprend une deuxième donnée d'exploitation logique et une deuxième donnée d'exploitation de visualisation correspondant à une pluralité de chemins de saut de page ;
le procédé comprenant en outre :
le stockage de la deuxième donnée d'exploitation obtenue dans une zone de stockage locale; et
l'exécution de la deuxième donnée d'exploitation et l'affichage d'une deuxième page en fonction de la deuxième donnée d'exploitation comprenant :
l'obtention de la deuxième donnée d'exploitation logique qui correspond à un premier chemin de saut de page et qui est dans la zone de stockage locale, et la transmission de la deuxième donnée d'exploitation logique à un conteneur d'exploitation, en particulier un conteneur d'exploitation JavaScriptCore ; et
l'obtention de la deuxième donnée d'exploitation de visualisation qui correspond au premier chemin de saut de page et qui est dans la zone de stockage locale, et la transmission de la deuxième donnée d'exploitation de visualisation au conteneur d'exploitation après que le conteneur d'exploitation a exécuté la deuxième donnée d'exploitation logique correspondant au premier chemin de saut de page, puis l'affichage de la deuxième page.

10. Dispositif de calcul (700), **caractérisé en ce qu'**il comprend une mémoire (706), un processeur (702) et un programme informatique (718) qui est stocké dans la mémoire et qui est exécuté sur le processeur (702) ; et le processeur (702), lorsqu'il exécute le programme informatique (718), met en œuvre le procédé selon l'une quelconque des revendications 1 à 9.

11. Support de stockage (706) stockant un ou plusieurs programmes, **caractérisé par le fait que** les un ou plusieurs programmes comprennent des instructions, et les instructions, lorsqu'elles sont exécutées par un dispositif de calcul (700), amènent le dispositif de calcul (700) à réaliser le procédé selon l'une quelconque des revendications 1 à 9.
